# EUROPÄISCHE PATENTSCHRIFT

(11) **EP 0 548 581 B1**
(45) Veröffentlichungstag und Bekanntmachung des Hinweises auf die Patenterteilung: **31.01.1996**
(21) Anmeldenummer: 92120244.6
(22) Anmeldetag: 27.11.1992
(51) Int. Cl.: F16F 9/04

(54) **Luftfeder mit einem wulstlosen Luftfederbalg aus elastomerem Werkstoff**
Air spring with a beadless air cushion made of elastomeric material
Ressort pneumatique à coussin d'air élastomérique sans talon

(30) Priorität: 21.12.1991 DE 4142561
(43) Veröffentlichungstag der Anmeldung: 30.06.1993
(73) Patentinhaber: Continental Aktiengesellschaft, D-30165 Hannover (DE)
(72) Erfinder: Hasselbring, Bernd, W-3000 Hannover 91 (DE); Wode, Stefan, W-3000 Hannover 1 (DE)

(56) Entgegenhaltungen:
- EP-A- 0 306 732
- EP-A- 0 319 448
- EP-A- 0 378 748
- WO-A-89/09142
- DE-U- 7 018 029
- GB-A- 2 005 799
- US-A- 3 066 929
- US-A- 4 946 144

## Beschreibung

Die Erfindung betrifft eine Luftfeder mit einem aus elastomerem Werkstoff bestehenden wulstlosen Luftfederbalg, der mit einem oder beiden Endabschnitten mittels jeweils eines Spannringes an je einem Anschlußteil dicht befestigt ist.

Für die Befestigung der wulstlosen Endabschnitte des Luftfederbalges beispielsweise an den mit dem Fahrgestell bzw. der Fahrzeugachse verbundenen Anschlußteilen haben sich geschlossene, radial plastisch verformbare Spannringe bewährt. Durch das radiale Verformen der Spannringe werden die Endabschnitte des wulstlosen Luftfederbalges haftschlüssig verspannt.

Die Auszugskraft des wulstlosen Luftfederbalges wird durch den Haftschluß der verspannten Endabschnitte begrenzt. Es ist möglich, daß die Endabschnitte im Fahrbetrieb allmählich aus der Verspannung herausgezogen werden, was ein Versagen der Luftfederung bedeuten würde.

Es ist aus der EP-A-0 151 696 bekannt, eine höhere Auszugskraft von verspannten Endabschnitten dadurch zu erreichen, daß ein Endabschnitt eines wulstlosen Luftfederbalges auf einen stutzenförmigen Ansatz geschoben wird, der umlaufende aufgesetzte Umfangsrippen aufweist. Unter dem Einfluß der radial einwärts gerichteten Preßkraft des aufgeschobenen und verformten Spannringes dringen diese Umfangsrippen in die elastisch nachgiebige Balgwandung ein, so daß die haftschlüssig wirksame Verspannung zusätzlich durch einen Formschluß in der Balgwand ergänzt wird. Die Auszugskraft wird durch diese Ausbildung erhöht. Allerdings kann ein aufgrund unterschiedlicher Fertigungstoleranzen zu starkes Pressen durch den radial verformten Spannring auf den Endabschnitt des wulstlosen Luftfederbalges nachteilig sein, da es zu einer Beschädigung des elastomeren Werkstoffes und der Festigkeitsträgerlage kommen kann. Andererseits kann ein zu schwaches Pressen zu einer ungenügenden Verspannung des Luftfederbalges führen.

Es sind außerdem noch eine weitere Vielzahl von Befestigungen der Balgwand des Endabschnittes eines wulstlosen Luftfederbalges bekannt, bei denen mittels eines radial plastisch verformten Spannringes die Balgwand auf dem Anschlußteil festgeklemmt wird. Es wurde beispielsweise vorgeschlagen, ein rotationssymmetrisches Anschlußteil mit einer umlaufenden Einbuchtung zu versehen, die von der Balgwand des Endabschnittes des wulstlosen Luftfederbalges überdeckt ist und in die die Balgwand durch einen plastisch verformten Spannring gedrückt wird. Dabei liegt der Spannring aber außerhalb der Kontur des Anschlußteiles. Die benötigte Haltekraft wird über den Haftungsschluß erzeugt. Die notwendige Haftung zwischen der Balgwand und den Spannteilen wird durch Normalkräfte erzeugt, welche in überwiegendem Maße radial gerichtet sind.

Ein Stand der Technik gemäß jeweiligem Oberbegriff der Ansprüche 1und 4 ist aus der EP-A-0 319 448 bekannt. Davon ausgehend liegt der Erfindung die Aufgabe zugrunde, eine Luftfeder derart auszugestalten, daß die Befestigung ihres wulstlosen Luftfederbalges höheren Auszugskräften ausgesetzt werden kann.

Die Aufgabe wird erfindungsgemäß durch die Merkmale des Anspruchs 1 wie auch die des Anspruchs 4 gelöst.

Der Endabschnitt des wulstlosen Luftfederbalges wird durch den in der Nut versenkten Spannring in dieser Nut selbst eingeklemmt. Die Nutbreite ist dabei mit der Höhe des Spannringes so abgestimmt, daß die Balgwand an einer oder beiden Nutseiten in einem Engpaß durch Wanddickenabnahme unter Druck gesetzt wird. Durch diese Verspannung der Balgwand an den Nutseiten und nicht im Nutgrund wird eine gesteigerte Zugfestigkeit der Luftfederbalgbefestigung erreicht, was zu einer Erhöhung der Balgauszugskräfte führt. Durch das versenkte Anordnen des Spannringes in der umlaufenden Nut des Anschlußteiles ist ein Abziehen des Spannringes mit dem Endabschnitt des Luftfederbalges durch die Balgzugkräfte nicht mehr möglich.

Im Unterschied zu den bisherigen Lösungen einer Befestigung für wulstlose Luftfederbälge wird die Balgwandklemmung des Endabschnittes nicht durch die radial gerichteten Normalkräfte des Spannringes hervorgerufen, sondern durch die Wanddickenabnahme auf einer oder beiden Seiten des versenkten Spannringes gegenüber den Nutseiten. Der Abstand von Nutgrund zu dem versenkten Spannring wird annähernd so groß gewählt wie die Balgwanddicke und trägt damit zur Klemmung der Balgwand nicht bei.

Die Haltekraft wird im wesentlichen dadurch erzielt, daß das Balgende bzw. die Balgenden nicht durch den bzw. durch die erstellten Engpässe gezogen werden kann bzw. können. Vorteilhafterweise wird das Balgende im Nutgrund so gefaßt, so daß das hinter dem Engpaß durch die Balgzugkraft gestaute Gummi in seiner Tendenz zum Bauchigwerden begrenzt und folglich das Balgende unter Druck gesetzt wird.

Durch die Balglängszugkräfte wird auf den Festigkeitsträger eine Zugkraft ausgeübt. Diese Zugkraft wird im Einspannungsbereich des Endabschnittes hinter dem Engpaß über im Elastomer auftretende Schubspannungen auf die Anschlußteile abgetragen.

Eine vorteilhafte Ausgestaltung der Erfindung wird im Anspruch 2 gekennzeichnet. Der runde Spannring liegt mit seiner größten axialen Ausdehnung im lichten Raum der umlaufenden Nut. Dabei hält er die Balgwand des Endabschnittes des Luftfederbalges derart fest, daß diese in die Nut hinein und um den Spannring herum aus der Nut heraus umgelenkt wird. Dabei durchläuft die Balgwand zwei Engpässe, die jeweils zwischen einer Nutseite und dem Spannring vorhanden sind.

Eine weitere vorteilhafte Ausgestaltung der Erfindung wird im Anspruch 3 gekennzeichnet. Der rechteckige Querschnitt des Spannringes bewirkt, daß in der Nut ein längerer Formkanal rechtwinklig zum einzigen Engpaß zwischen Nutseite und Spannring verläuft. In diesem Formkanal kann das Elastomervolumen Schubspannungen aufnehmen und an das Anschlußteil übertragen.

Hat der Spannring in seiner Ausgangsform einen größeren Durchmesser als die Außenkontur des Anschlußteiles, wird er nach seiner Positionierung durch radial einwirkende Preßkräfte in seinem Durchmesser verringert, bis er versenkt in dem Nutraum angeordnet ist und dabei mit einer oder beiden Nutseiten einen Engpaß zur Klemmung der Balgwand bildet. Zwischen Nutgrund und Spannring wird keine Pressung der elastomeren Balgwand bewirkt. Der Spannring wird lediglich so weit gegen den Nutgrund verformt, daß die Balgwand einerseits am Nutgrund und andererseits am Spannring anliegt. Dadurch wird ein Bauchigwerden des Elastomers bei Zugbelastung des in der Balgwand liegenden Festigkeitsträgers verhindert.

In vorteilhafter Ausgestaltung des Verfahrens nach Anspruch 4 wird ein Spannring zur Befestigung der Balgwand verwandt, der in seiner Höhe kleiner ist als die Differenz der Anfangsnutbreite abzüglich der einfachen oder doppelten Balgwanddicke. Nach der plastischen Verformung in Richtung Verringerung des Durchmessers des Spannringes wird die Nutbreite des Anschlußteiles verringert, so daß die in die Nut hereingezogene und umgelenkte Balgwand unter Druck gesetzt und verspannt wird. Die Verringerung der Nutbreite kann beispielsweise durch Stauchung des Anschlußteiles oder durch Verschrauben eines zweiteiligen Anschlußteiles erfolgen.

In weiterer vorteilhafter Ausgestaltung des Verfahrens nach Anspruch 4 wird der wulstlose Luftfederbalg von einem inneren Spannring an dem jeweiligen Anschlußteil befestigt. Der Durchmesser des Spannringes wird durch radiale plastische Verformung vergrößert, bis er einerseits in dem Nutraum liegt aber andererseits die eingespannte Balgwand nur unwesentlich einspannt. Anschließend wird die Nutbreite des Anschlußteiles verringert, bis die in die Nut hereingezogene und umgelenkte Balgwand an der oder den Nutseiten unter Druck gesetzt und verspannt wird.

Durch die Erfindung wird der den Endabschnitt des wulstlosen Luftfederbalges an dem Anschlußteil befestigende Spannring in eine umlaufende Nut des Anschlußteiles versenkt und klemmt dabei den umgelenkten Balgwandabschnitt an einer oder beiden Seiten der Nut aufgrund einer dort auftretenden, wesentlichen Wanddickenabnahme ein. Durch diese Umlenkung und seitliche Verspannung der Balgwand wird die Auszugskraft des wulstlosen Luftfederbalges wesentlich erhöht. Außerdem wird mit dieser Spannart eine kurze Einspannlänge ermöglicht.

Anhand der Zeichnung werden nachstehend vier schematische Ausführungsbeispiele der Erfindung näher erläutert. Es zeigt
- Fig. 1: die Befestigung eines wulstlosen Luftfederbalges an einem zylindrischen Ansatz eines Anschlußteiles,
- Fig. 2: in schematischer Darstellung den auf das Anschlußteil aufgeschobenen Endabschnitt des wulstlosen Luftfederbalges vor seiner Verspannung,
- Fig. 3: den in Fig. 2 gezeigten Endabschnitt nach der radialen plastischen Verformung des Spannringes,
- Fig. 4: die Befestigung eines wulstlosen Luftfederbalges mit der Anordnung eines Spannringes, der an einer Nutseite anliegt,
- Fig. 5: die innere Befestigung eines Endabschnittes eines wulstlosen Luftfederbalges in einem zylindrischen Ansatz eines Anschlußteiles,
- Fig. 6: in schematischer Darstellung den in den zylindrischen Ansatz des Anschlußteiles gemäß Fig. 5 eingeschobenen Endabschnitt des wulstlosen Luftfederbalges vor seiner Verspannung,
- Fig. 7: den in Fig. 6 gezeigten Endabschnitt nach der radialen plastischen Verformung des Spannringes,
- Fig. 8: eine innere Befestigung eines wulstlosen Luftfederbalges in einem zylindrischen Ansatz eines Anschlußteiles mittels eines Spannringes mit rundem Querschnitt.

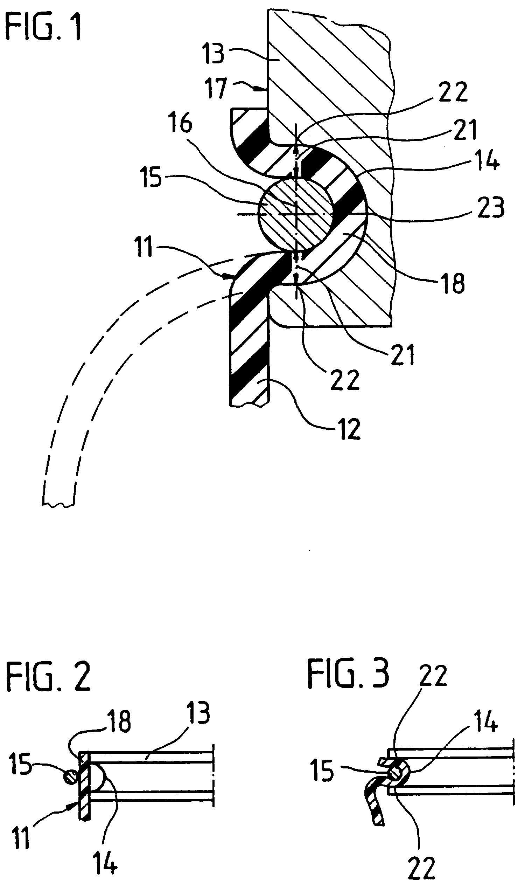

Der Endabschnitt 11 eines wulstlosen Luftfederbalges 12 (Fig. 1) ist auf ein zylindrisch ausgebildetes, an einem Fahrgestell befestigtes Anschlußteil 13 geschoben. Das Anschlußteil 13 weist eine umlaufende Nut 14 auf, in der ein im Durchmesser durch radial plastische Verformung verkleinerter Spannring 15 versenkt angeordnet ist. Unter der versenkten Anordnung wird verstanden, daß mindestens die größte axiale Höhe des Spannringes 15, parallel zur Mittelachse des Anschlußteiles 13 gesehen, innerhalb der Nut 14 liegt. In diesem Fall ist die größte axiale Ausdehnung des Spannringes 15 im Verlauf seiner achsparallelen Querschnittsachse 16 zu sehen, die vollständig mit Abstand zur Außenfläche 17 des Anschlußteiles 13 innerhalb der Nut 14 liegt.

Dabei ist die Balgwand 18 des Endabschnittes 11 in die Nut 14 hinein umgelenkt und um den Spannring 15 hinaus wieder auf den Umfang des Anschlußteiles 13 herausgeführt.

Der jeweilige Abstand zwischen jeder Nutseite 22 und dem Spannring 15 ist kleiner als die Balgwanddicke und bildet einen Engpaß 21, in dem die Balgwand 18 komprimiert und dadurch an den Nutseiten 22 verspannt wird. Der Engpaß 21 wird derart eng ausgelegt, daß einerseits eine ausreichende Festklemmung der Balgwand 18 und andererseits aber keine Beschädigung des Elastomermaterials und der darin eingebetteten Gewebelagen erfolgt.

Der Abstand zwischen Nutgrund 23 und Spannring 15 ist gleich oder geringfügig kleiner als die Balgwanddicke. Dadurch wird keine oder lediglich eine sehr geringe Komprimierung der Balgwand 18 bewirkt. Allerdings wird dem versuchten Bauchigwerden des Balgwandelastomers unter Zugbelastung durch die Begrenzung des Raumes zwischen den Engpässen 21 entgegengewirkt.

Die Herstellung der in Fig. 1 gezeigten wulstlosen Luftfederbalg-Befestigung wird schematisch in den beiden Fig. 2 und 3 dargestellt. In der Fig. 2 ist der Endabschnitt 11 des wulstlosen Luftfederbalges über die Nut 14 des Anschlußteiles 13 geschoben. Der radial plastisch verformbare Spannring 15 ist um den Endabschnitt 11 des wulstlosen Luftfederbalges in Höhe der Nut 14 positioniert. Durch an sich bekannte mechanische Preßeinrichtungen wird nun der Spannring 15 in seinem Durchmesser verkleinert, so daß sich die Balgwand 18 in die Nut 14 hineinzieht (Fig. 3) und dort an den Nutseiten 22 verspannt wird, da der Abstand zwischen Nutseiten 22 und Spannring 15 geringer ist als die Balgwanddicke und jeweils einen Engpaß 21 bildet. Der Spannring 15 ist in der Nut 14 nach der Herstellung der Befestigung versenkt angeordnet, d.h. er liegt innerhalb der Außenkontur des Anschlußteiles 13.

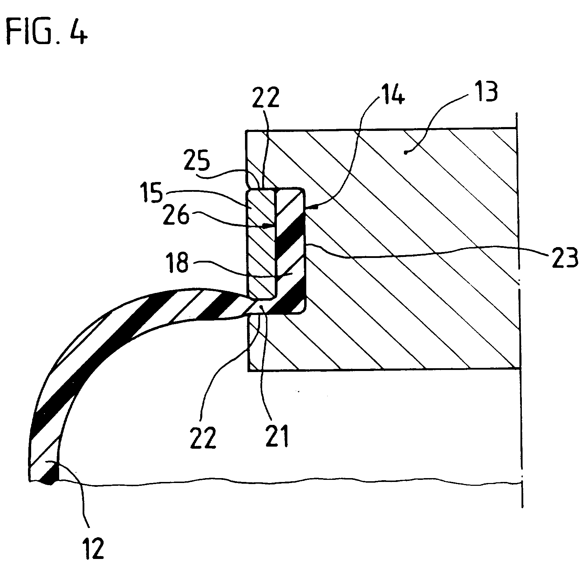

Die in Fig. 4 gezeigte Befestigung eines wulstlosen Luftfederbalges 12 weist einen im wesentlichen rechteckigen Spannring 15 auf. Dieser Spannring 15 ist ebenfalls radial nach innen plastisch verformt, so daß er einen geringeren Enddurchmesser aufweist und innerhalb einer Nut 14 eines Anschlußteiles 13 liegt. Dabei ist der Spannring 15 derart angeordnet, daß er mit seiner oberen Stirnfläche 25 an der oberen Nutseite 22 anliegt und dadurch nur einen Engpaß 21 bildet, und zwar mit der unteren Nutseite 22. In diesem einen Engpaß 21 wird die Balgwand komprimiert und dadurch festgeklemmt. Die elastische Verformung des Elastomers setzt sich hinter dem Engpaß 21 nicht mehr fort. Der Abstand zwischen dem Inneren des Spannringes 15 und dem Nutgrund 23 ist derart bemessen, daß das dort befindliche Ende der Balgwand 18 lediglich schwach komprimiert wird, d.h., daß das Elastomer in diesem Einspannraum 26 geformt gehalten bleibt.

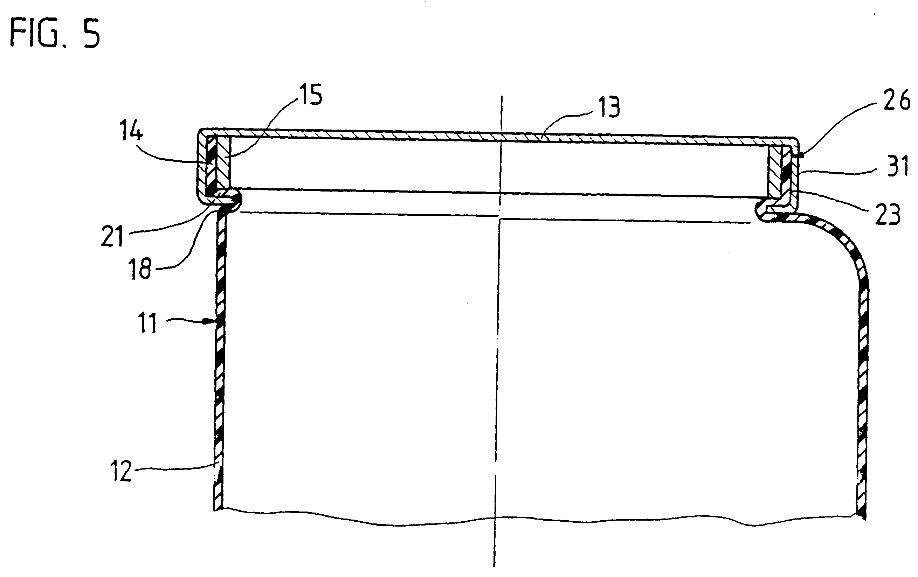

In dem Ausführungsbeispiel gemäß Fig. 5 ist eine innere Befestigung des Endabschnittes 11 eines Luftfederbalges 12 gezeigt. Das Anschlußteil 13 weist dabei einen nach unten doppelt abgekröpften Rand 31 auf, der eine innere Nut 14 bildet. In dieser Nut 14 ist ein im Durchmesser durch radial plastische Verformung vergrößerter Spannring 15 versenkt angeordnet, wobei die Balgwand 18 des Endabschnittes 11 durch einen Engpaß 21 geführt ist und mit ihrem Ende in dem Einspannraum 26 zwischen Nutgrund 23 und Spannring 15 liegt. Die linke Hälfte der Fig. 5 zeigt den Luftfederbalg 12 im eingespannten aber drucklosen Zustand, während die rechte Hälfte der Fig. 5 den Luftfederbalg 12 unter Druck gesetzt zeigt.

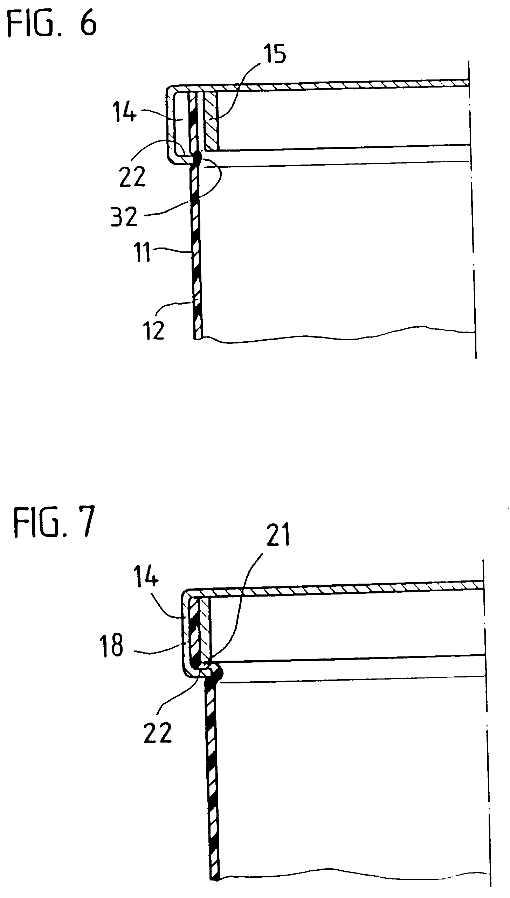

Die Herstellung der in Fig. 5 gezeigten inneren Luftfederbalgbefestigung wird schematisch in den Fig. 6 und 7 dargestellt. In der Fig. 6 ist der Endabschnitt 11 des wulstlosen Luftfederbalges 12 in den kreisringförmigen Ansatz, der durch den nach unten umgebördelten Rand 31 gebildet ist, geschoben. Der Luftfederbalg 12 liegt leicht klemmend an der freien Stirnkante 32 des umgebördelten Randes 31 an. Der radial plastisch verformbare Spannring 15 ist in dem Endabschnitt 11 des wulstlosen Luftfederbalges 12 in Höhe der Nut 14 positioniert. Durch Vergrößern des Durchmessers des Spannringes 15, beispielsweise durch Strecken oder durch Benutzen eines sogenannten Memory-Metalles, wird die Balgwand 18 in die Nut 14 hineingezogen (Fig. 7) und dort an der Nutseite 22 verspannt, da der dort zwischen Spannring 15 und Nutseite 22 entstehende Engpaß 21 geringer ist als die Balgwanddicke.

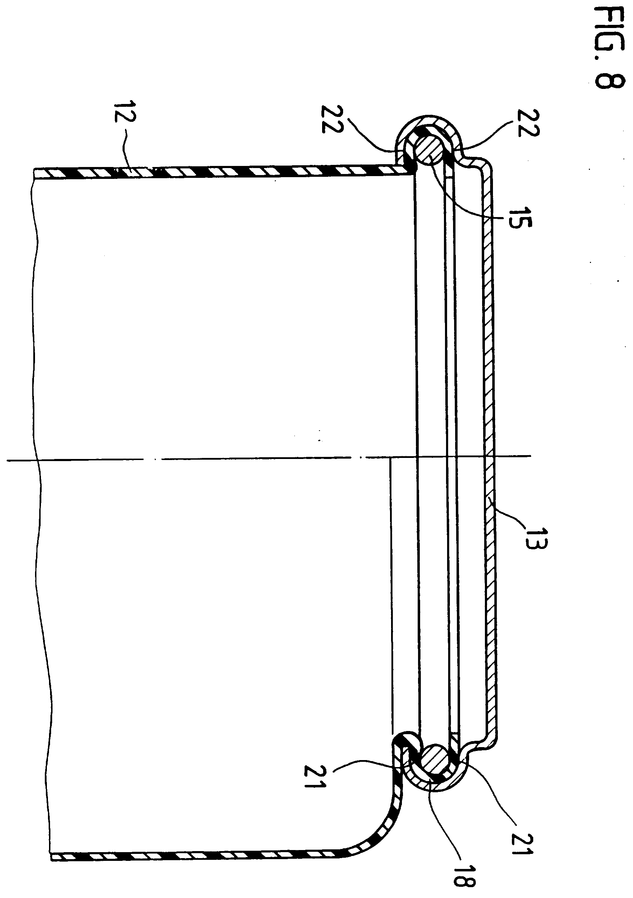

In der Fig. 8 wird eine weitere innere Luftfederbalgbefestigung in einem Ansatz eines Anschlußteiles 13 gezeigt, wobei der Spannring 15 einen runden Querschnitt aufweist. Dadurch werden im verspannten Zustand an den beiden Nutseiten 22 zwei Engpässe 21 gebildet, in denen die Balgwand 18 des Luftfederbalges 12 komprimiert und fest eingeklemmt wird.

Eine innere Befestigung des Luftfederbalges 12 schützt den Spannring 15 vor schädlichen Umwelteinflüssen und vermeidet die Gefahr des Ausknickens des Spannringes 15, die beim Stauchen zur Durchmesserverringerung auftreten kann. Allerdings ist die innere Befestiung nur an einem Ende des Luftfederbalges möglich.

### Bezugszeichenliste

11 Endabschnitt
12 wulstloser Luftfederbalg
13 Anschlußteil
14 Nut
15 Spannring
16 Querschnittsachse
17 Außenfläche
18 Balgwand
21 Engpaß, Abstand Nutseite zu Spannring
22 Nutseite
23 Nutgrund
25 obere Stirnfläche, Spannring
26 Einspannraum
31 abgekröpfter Rand
32 Stirnkante

## Patentansprüche

1. Luftfeder mit einem aus elastomerem Werkstoff bestehenden wulstlosen Luftfederbalg, der mit einem oder beiden Endabschnitten mittels jeweils eines Spannringes an je einem Anschlußteil dicht befestigt ist, wobei
das Anschlußteil (13) eine umlaufende, radial zur Längsachse des Anschlußteils (13) gerichtete Nut (14) aufweist, **gekennzeichnet durch folgende Merkmale:** in der Nut (14) liegt der Spannring (15) mit mindestens seiner größten axialen Ausdehnung derart, daß er mit mindestens einer Nutseite (22) einen die Balgwand (18) des Endabschnittes (11) des Luftfederbalges (12) axial festklemmenden Engpaß (21) bildet, wobei der Abstand vom Nutgrund (23) zum Spannring (15) der Wanddicke des Luftfederbalges (12) entspricht.

2. Luftfeder nach Anspruch 1, gekennzeichnet durch folgende Merkmale:
- der Spannring (15) weist einen runden Querschnitt auf,
- die Mittelachse (16) des Querschnittes, die in Balglängsrichtung liegt, ist innerhalb des Nutraumes mit Abstand zur Außenkontur (17) oder Innenkontur des die Nut (14) aufweisenden Anschlußteiles (13) angeordnet,
- die Breite der Nut (14) ist kleiner als die Summe aus der Höhe des Spannringes (15) und der zweifachen Balgwanddicke,
- der Spannring (15) bildet durch seine mittige Lage in der Nut (14) mit jeder der beiden Nutseiten (22) einen die Balgwand (18) festklemmenden Engpaß (21).

3. Luftfeder nach Anspruch 1, gekennzeichnet durch folgende Merkmale:
- der Querschnitt des Spannringes (15) ist im wesentlichen rechteckig,
- der Spannring (15) liegt an einer Nutseite (22) an und bildet mit der anderen Nutseite (22) einen Engpaß (21), der kleiner ist als die Balgwanddicke.

4. Verfahren zur Befestigung eines wulstlosen Luftfederbalges aus elastomerem Werkstoff mit einem oder beiden Endabschnitten an je einem Anschlußteil, das eine umlaufende, radial zur Längsachse des Anschlußteils (13) gerichtete Nut (14) aufweist, wobei der zu befestigende Endabschnitt (11) des wulstlosen Luftfederbalges (12) über das oder in das stutzenförmige Anschlußteil (13) gesteckt wird und ein Spannring (15) über oder in den Endabschnitt (11) geschoben und in Höhe der Nut (14) positioniert wird, gekennzeichnet durch foldenge Schritte : der Abstand zwischen Spannring (15) und Nutgrund (23) und/oder der Abstand zwischen Spannring (15) und einer oder beiden Nutseiten (22) wird derart verringert bis der Spannring (15) mit seiner größten axialen Ausdehnung in der Nut (14) versenkt ist und die Balgwand (18) des Endabschnittes (11) umgelenkt in der Nut (14) unter Bildung mindestens eines axial festklemmenden Engpasses (21) zwischen Spannring (15) und einer Nutseite (22) festhält, wobei der Abstand vom Nutgrund (23) zum Spanning (15) der Wanddicke des Luftfederbalges (12) entspricht.

5. Verfahren nach Anspruch 4, gekennzeichnet durch folgende Merkmale:,
- der außen um den Endabschnitt geschobene Spannring (15) ist in seiner Höhe kleiner als die Differenz der Anfangsnutbreite abzüglich der einfachen oder doppelten Balgwanddicke des Endabschnittes,
- der Durchmesser des Spannringes (15) wird durch radiale plastische Verformung verringert, bis die Balgwand seitlich nahezu unverspannt am Nutgrund liegt,
- anschließend wird die Nutbreite des Anschlußteiles verringert, bis die in die Nut hereingezogene und umgelenkte Balgwand an der oder den Nutseiten unter Druck gesetzt und verspannt wird.

6. Verfahren nach Anspruch 4, gekennzeichnet durch folgende Merkmale:
- der innen in den Endabschnitt geschobene Spannring (15) ist in seiner Höhe kleiner als die Differenz der Anfangsnutbreite abzüglich der einfachen oder doppelten Balgwanddicke des Endabschnittes (11),
- der Durchmesser des Spannringes (15) wird durch radiale plastische Verformung vergrößert, bis die Balgwand (18) seitlich nahezu unverspannt am Nutgrund liegt, anschließend wird die Nutbreite des Anschlußteiles verringert bis die in die Nut hereingezogene und umgelenkte Balgwand an der oder den Nutseiten unter Druck gesetzt und verspannt wird.

## Claims

1. Air spring, having a beadless air spring bellows, which is formed from elastomeric material and has one or both end portions tightly secured to a respective connection piece by means of a respective tensioning ring, the connection piece (13) having a circumferential groove (14) which is orientated radially relative to the longitudinal axis of the connection piece (13), characterised by the following features:
- the tensioning ring (15) lies in the groove (14) with at least its greatest axial expansion in such a manner that it forms, with at least one groove side (22), a narrow pass (21) which axially securely clamps the bellows wall (18) of the end portion (11) of the air spring bellows (12), the spacing between the groove base (23) and the tensioning ring (15) corresponding to the wall thickness of the air spring bellows.

2. Air spring according to claim 1, characterised by the following features:
- the tensioning ring (15) has a circular cross-section,
- the central axis (16) of the cross-section, which lies in the longitudinal direction of the bellows, is disposed internally of the groove area at a spacing from the external configuration (17) or internal configuration of the connection piece (13) provided with the groove (14),
- the width of the groove (14) is smaller than the sum of the height of the tensioning ring (15) and twice the thickness of the bellows wall, and
- because of its central position in the groove (14), the tensioning ring (15) forms, with each of the two groove sides (22), a narrow pass (21) which securely clamps the bellows wall (18).

3. Air spring according to claim 1, characterised by the following features:
- the cross-section of the tensioning ring (15) is substantially rectangular, and
- the tensioning ring (15) abuts against a groove side (22) and forms, with the other groove side (22), a narrow pass (21) which is smaller than the thickness of the bellows wall.

4. Method of securing one or both end portions of a beadless air spring bellows, which is formed from elastomeric material, to a respective connection piece which has a circumferential groove (14) orientated radially relative to the longitudinal axis of the connection piece (13), whereby the end portion (11) to be secured of the beadless air spring bellows (12) is placed over or in the socket-like connection piece (13), and a tensioning ring (15) is slipped over or into the end portion (11) and positioned on a level with the groove (14), characterised by the following steps:
- the spacing between the tensioning ring (15) and the groove base (23) and/or the spacing between the tensioning ring (15) and one or both groove sides (22) is reduced to such an extent that the tensioning ring (15) is immersed with its greatest axial expansion in the groove (14) and securely clamps the bellows wall (18) of the end portion (11), having been guided in the groove (14), so as to form at least one axially securely clamping narrow pass (21) between the tensioning ring (15) and a groove side (22), the spacing between the groove base (23) and the tensioning ring (15) corresponding to the wall thickness of the air spring bellows (12).

5. Method according to claim 4, characterised by the following features:
- the tensioning ring (15), which is slipped externally around the end portion, has a smaller height than the difference inn the initial groove width less the single thickness or double the thickness of the bellows wall of the end portion,
- the diameter of the tensioning ring (15) is reduced by radial plastic deformation until the bellows wall lies laterally virtually untensioned on the groove base,
- then the groove width of the connection piece is reduced until the bellows wall, which has been drawn and guided into the groove, is pressurised and tensioned on the groove side or sides.

6. Method according to claim 4, characterised by the following features:
- the tensioning ring (15), which is slipped internally into the end portion, has a smaller height than the difference in the initial groove width minus the single thickness or double the thickness of the bellows wall of the end portion (11),
- the diameter of the tensioning ring (15) is enlarged by radial plastic deformation until the bellows wall (18) lies laterally virtually untensioned on the groove base, then the groove width of the connection piece is reduced until the bellows wall, which has been drawn and guided into the grove, is pressurised and tensioned on the groove side or sides.

## Revendications

1. Ressort pneumatique comprenant un soufflet de ressort pneumatique sans boudin, en matériau élastomère, dont une ou les deux parties d'extrémité est fixée hermétiquement dans chaque cas au moyen d'un anneau de serrage sur un élément de raccord, l'élément de raccord (13) comprenant une gorge circonférentielle (14) orientée radialement sur l'axe longitudinal de l'élément de raccord (13), caractérisé par les particularités suivantes :
- l'anneau de serrage (15) est disposé dans la gorge (14) de manière qu'au moins sa dimension axiale maximale forme avec au moins un côté (22) de la gorge un ajustement serré (21) qui bloque axialement la cloison (18) du soufflet de la partie d'extrémité (11) du soufflet (12) du ressort pneumatique, la distance du fond (23) de la gorge à l'anneau de serrage (15) correspondant à l'épaisseur de la cloison du soufflet du ressort pneumatique.

2. Ressort pneumatique selon la revendication 1, caractérisé par les particularités suivantes :
- l'anneau de serrage (15) a une section transversale ronde,
- l'axe de symétrie (16) de la section qui est orienté dans la direction de la longueur du soufflet est disposé à l'intérieur du volume de la gorge à distance du contour extérieur (17) ou du contour intérieur de l'élément de raccord (13) qui comporte la gorge (14),
- la largeur de la gorge (14) est plus petite que la somme de la hauteur de l'anneau de serrage (15) et du double de l'épaisseur de la cloison du soufflet,
- l'anneau de serrage (15) forme par sa position centrale dans la gorge (14) et avec chacun des deux côtés (22) de la gorge un ajustement serré (21) qui bloque la cloison du soufflet (18).

3. Ressort pneumatique selon la revendication 1, caractérisé par les particularités suivantes :
- la section de l'anneau de serrage (15) est sensiblement rectangulaire,
- l'anneau de serrage (15) est en appui contre un côté de la gorge (22) et il forme avec l'autre côté (22) de la gorge un ajustement serré (22) qui est plus étroit que l'épaisseur de la cloison du soufflet.

4. Procédé de fixation d'un soufflet sans boudin de ressort pneumatique en matériau élastomère, dont une ou toutes les deux parties d'extrémité est en appui contre un élément de raccord qui comporte une gorge circonférentielle (14) qui est orientée radialement sur l'axe longitudinal de l'élément de raccord (13), la partie d'extrémité (11) du soufflet (12) sans boudin du ressort pneumatique qui doit être fixée étant enfilée sur ou dans l'élément de raccord (13) en forme de tubulure et un anneau de serrage (15) étant enfilé sur ou dans la partie d'extrémité (11) et positionné au niveau de la gorge (14), caractérisé par les étapes suivantes
la distance séparant l'anneau de serrage (15) et le fond de la gorge (23) et/ou la distance séparant l'anneau de serrage (15) et l'un ou tous les deux côtés (22) de la gorge subit une réduction jusqu'à ce que la dimension axiale maximale de l'anneau de serrage (15) soit noyée dans la gorge (14) et de manière que l'anneau de serrage (15) immobilise la cloison (18) de la partie d'extrémité (11) du soufflet qui est déviée vers la gorge (14) en formant au moins un ajustement serré (21) de blocage axial entre l'anneau de serrage (15) et un côté (22) de la gorge, la distance du fond (23) de la gorge à l'anneau de serrage (15) correspondant à l'épaisseur de la cloison du soufflet (12) du ressort pneumatique.

5. Procédé selon la revendication 4, caractérisé par les particularités suivantes :
la hauteur de l'anneau de serrage (15) enfilé extérieurement autour de la partie d'extrémité est plus faible que la différence de la largeur initiale de la gorge moins le simple ou le double de l'épaisseur de la partie d'extrémité de la cloison du soufflet,
le diamètre de l'anneau de serrage (15) subit une diminution par déformation plastique radiale jusqu'à ce que la cloison du soufflet repose contre le fond de la gorge pratiquement sans être fixée,
- ensuite la largeur de la gorge de l'élément de raccord subit une diminution jusqu'à ce que la cloison du soufflet insérée et déviée dans la gorge soit mise sous pression et immobilisée contre le ou les côté(s) de la gorge.

6. Procédé selon la revendication 4, caractérisé par les particularités suivantes :
- la hauteur de l'anneau de serrage (15) enfilé intérieurement dans la partie d'extrémité est inférieure à la différence de la largeur initiale de la gorge moins le simple ou le double de l'épaisseur de la partie d'extrémité (11) de la cloison du soufflet,
- le diamètre de l'anneau de serrage (15) subit un agrandissement par déformation plastique radiale jusqu'à ce que la cloison (18) du soufflet soit en appui latéralement contre le fond de la gorge pratiquement sans être fixée, ensuite la largeur de la gorge de l'élément de raccord subit une diminution jusqu'à ce que la cloison du soufflet insérée et déviée dans la gorge soit mise sous pression et immobilisée contre le ou les côté(s) de la gorge.
